# EUROPEAN PATENT APPLICATION

(11) **EP 4 763 497 A1**
(43) Date of publication of application: **24.06.2026**
(21) Application number: 24222495.4
(22) Date of filing: 20.12.2024
(51) Int. Cl.: B29D 24/00, B64C 3/20, B64C 3/18, B64C 3/24, B64C 3/26, B29L 31/30

(54) **METHOD FOR MANUFACTURING A STIFFENED AERODYNAMIC STRUCTURE COMPONENT**

(71) Applicant: AIRBUS Operations GmbH, 21129 Hamburg (DE)
(72) Inventor: DAANDELS, Dort, 21129 Hamburg (DE); HAUNERT, Jan, 21129 Hamburg (DE)
(74) Representative: LKGLOBAL Partnerschaftsgesellschaft mbB

(57) **Abstract**

A Method (100) for manufacturing a stiffened aerodynamic structure component (10) is provided, comprising the following steps:
- Providing (102) an aerodynamic structure component (10), wherein the aerodynamic structure component (10) includes a plurality of spar elements (12) extending spanwise within the aerodynamic structure component (10);
wherein the plurality of spar elements (12) is integrally formed with an upper skin section (14) and a lower skin section (16), thereby providing an integrally formed aerodynamic structure component (10),
- Generating (104) at least one chordwise reinforcement element (18) by injecting a curable medium (32), preferably via at least one injection hole (20), in the upper skin section (14) and/or the lower skin section (16).

## Description

### Technical Field

The invention relates to improved attachment and load transmission concepts of aerodynamic structures. In particular, the invention relates to a method for manufacturing a stiffened aerodynamic structure component.

### Background

The transmission of loads among components of aerodynamic systems is an important aspect that has to be considered during the design process of such systems. In particular, strength requirements, low manufacturing/assembly costs in combination with a reliable and stable manufacturing/assembly process are the most important issues that have to be dealt with during the design process. The usage of fiber reinforced materials which has become more popular over the recent years allows to reduce the number of parts that have to be assembled, but makes the design process even more challenging since material behaviors are different when compared to systems in which a plurality of different parts are assembled. For example, the so-called "unfolding" of layers of a fiber reinforced material is a behavior of fiber reinforced materials that should be avoided in order to provide enhanced structural stability and strength requirements.

### Summary of the invention

The object of the invention is to improve the load transmission within fiber reinforced aerodynamic structures.

A method, a component and an aircraft according to the features of the independent claims is provided. Further embodiments of the invention are evident from the dependent claims and from the following description.

According to an aspect of the invention, a method for manufacturing a stiffened aerodynamic structure component is provided. The stiffened aerodynamic component may be a flap component, having an upper skin section and a lower skin section. The method comprises the following steps:
- Providing an aerodynamic structure component, wherein the aerodynamic structure component includes a plurality of spar elements extending spanwise within the aerodynamic structure component;
   wherein the plurality of spar elements is integrally formed with an upper skin section and a lower skin section, thereby providing an integrally formed aerodynamic structure component,
- Generating at least one chordwise reinforcement element by injecting a curable medium preferably via at least one injection hole in the upper skin section and/or the lower skin section.

The method begins with providing an aerodynamic structure component. The component includes a plurality of spar elements that extend spanwise, ensuring the distribution of loads along the length of the structure. Spanwise" refers to the direction that runs along the span of the aerodynamic structure. It describes the orientation parallel to the line between the root, where the structure attaches to the main body, such as the fuselage of an aircraft, and the tip. The spar elements are integrally formed with both an upper skin section and a lower skin section, resulting in the aerodynamic structure.

To further strengthen the structure, the method involves generating at least one chordwise reinforcement element. In the method described, the chordwise reinforcement element may be defined as a core structure that is integrated into the aerodynamic component to enhance its structural integrity.This is achieved by injecting a curable medium into the aerodynamic structure through injection holes located in either the upper skin section, the lower skin section, or both. The curable medium, typically a resin or similar material, is distributed within the internal cavities of the structure to create the reinforcement element once it solidifies. This step not only enhances the structural rigidity of the aerodynamic component but also ensures that loads are efficiently transmitted across both the spanwise and chordwise directions, providing superior resistance to mechanical stresses and deformations during operation.

By employing these integrative manufacturing steps, the resulting aerodynamic structure component achieves a balance of lightweight construction, enhanced durability, and streamlined production processes. This approach improves performance and reliability, making it particularly advantageous for applications in aviation and other industries requiring high-strength, lightweight materials.

According to an embodiment, the method further comprises the step of providing at least one bay for the curable medium to be injected by providing at least one dam in a chordwise direction of the aerodynamic structure component.

The chordwise direction extends from the leading edge to the trailing edge of the structure, perpendicular to the spanwise direction. In this process, a dam acts as a barrier or partition within the component, confining the curable medium to a specific region during the injection. This setup creates a bay, an isolated compartment where the medium can flow, settle, and cure in a controlled manner.

The inclusion of dams offers several advantages. First, it ensures precise control over the distribution of the curable medium, allowing for uniform application and preventing it from spreading into unintended areas. This approach enhances the structural reinforcement of the component, particularly in regions subjected to high stress or requiring additional rigidity. By focusing reinforcement efforts on specific areas, the overall weight of the structure can be minimized, optimizing its aerodynamic performance.

Additionally, the use of dams simplifies the injection process, minimizing the risks of leakage or overflow and thereby improving process reliability. This configuration also allows for the creation of multiple bays with tailored reinforcement properties, enabling the structure to meet specific performance and load-bearing requirements. The controlled application of the curable medium reduces material waste and production time, making the process more cost-efficient while maintaining the structural integrity of the component.

According to an embodiment, the dam comprises an inflatable element. The inflatable dam can be temporarily positioned within the aerodynamic structure component to partition and isolate specific regions for the injection process. Once the curable medium has been injected and sufficiently cured, the inflatable element can be deflated and removed, leaving behind a precisely formed chordwise reinforcement element.

The use of an inflatable dam offers significant advantages in the manufacturing process. It provides a flexible and adaptable solution, as the inflatable element can conform to various shapes and sizes of the aerodynamic structure component. This adaptability is particularly useful in complex geometries where rigid dams may be challenging to implement.

Moreover, inflatable dams simplify the assembly and disassembly process. Unlike permanent partitions, they do not require additional machining or bonding, reducing the risk of damage to the surrounding material. After use, they can be easily deflated and reused for other components, contributing to cost savings and sustainability.

This approach also enhances precision during the injection process. By creating a temporary barrier that tightly seals off specific areas, the inflatable dam ensures that the curable medium is confined to the desired bay. This controlled distribution minimizes waste, improves the structural uniformity of the reinforcement, and reduces the likelihood of defects.

According to an embodiment, the inflatable element is adapted to remain in the aerodynamic structure component. The permanent integration of the inflatable element into the structure provides several notable advantages.

First, leaving the inflatable element in place eliminates the need for its removal, which can be a challenging task in components with complex geometries or limited access. This simplifies the manufacturing process, reducing production time and the risk of damage to the surrounding material during extraction.

Second, the inflatable element, when left in the structure, may serve as a structural or functional component. For instance, it can act as a lightweight filler or stabilizer within the bay, enhancing the stiffness and stability of the overall aerodynamic structure. This added stiffness is particularly beneficial in areas subject to high loads or stresses during operation, as it helps distribute forces more evenly across the component.

Additionally, the presence of the inflatable element can provide damping properties, reducing vibrations and improving the aerodynamic performance of the structure. If the material of the inflatable element is chosen to be compatible with the surrounding composite or metallic materials, it can contribute to the structural integrity and longevity of the component.

Overall, the adaptation of the inflatable element to remain in the aerodynamic structure component introduces a dual-purpose solution serving as both a manufacturing aid and a functional part of the final product. This enhances efficiency, reduces manufacturing complexity, and potentially improves the performance characteristics of the aerodynamic structure.

According to an embodiment, the inflatable element is adapted to be removable from the aerodynamic structure component via a hole.

The removability of the inflatable element offers several practical advantages. It ensures that the internal structure of the aerodynamic component remains free of any non-essential materials, thereby reducing the overall weight of the component.

Using the injection hole for removal eliminates the need for additional openings or access points, simplifying the design and minimizing structural discontinuities that could compromise the aerodynamic performance or structural integrity. This approach also streamlines the manufacturing process, as it avoids introducing unnecessary complexities in the configuration.

Furthermore, the removable nature of the inflatable element allows for its reuse in subsequent manufacturing cycles, contributing to cost savings and sustainability.

Overall, the removable inflatable element provides a lightweight, reusable, and efficient solution, aligning with the demands for high-performance and cost-effective manufacturing processes in the production of aerodynamic structures.

According to an embodiment, the method further comprises the step of providing a hollow support structure, preferably a honeycomb structure, to generate the chordwise reinforcement element.

The additional step of incorporating a hollow support structure, such as a honeycomb structure, assists in generating the chordwise reinforcement element within the aerodynamic structure component. The hollow support structure serves as a lightweight, high-strength framework that enhances the mechanical properties of the component while maintaining minimal weight. The hollow structure can also be referred to as a core.

The honeycomb configuration is particularly advantageous due to its inherent structural efficiency. It provides resistance to compressive and shear forces, which are critical in maintaining the integrity of the aerodynamic component under operational loads. This reinforcement ensures that the structure can withstand the stresses experienced during flight or operation, improving overall durability and reliability.

The hollow support structure also acts as a guide or template during the injection process of the curable medium. It helps distribute the medium evenly across the chordwise direction, ensuring consistent reinforcement and minimizing the risk of defects or weak points within the cured element. By anchoring the reinforcement to a stable and predefined geometry, the method enhances precision in manufacturing and reduces variability between components.

Additionally, the integration of a hollow support structure, particularly one with a honeycomb design, provides benefits in terms of vibration damping and energy absorption. These properties are particularly valuable in aerospace applications, where components are exposed to dynamic and cyclical loads.

From a manufacturing perspective, the hollow support structure may be pre-fabricated and inserted into the aerodynamic component during assembly. This approach simplifies the production process and ensures compatibility with existing workflows.

In summary, the incorporation of a hollow support structure, such as a honeycomb, significantly enhances the mechanical and functional properties of the chordwise reinforcement element. It combines strength, lightweight efficiency, and manufacturing precision, making it an integral component of advanced aerodynamic structure designs.

According to an embodiment, the method further comprises the steps of:
- Injecting the curable medium in the hollow support structure from a first outer surface, preferably from the upper skin section, of the aerodynamic structure component into a first connection area of the aerodynamic structure component and the hollow support structure,
- Curing the curable medium to form a first connection between the aerodynamic structure component and the hollow support structure in the first connection area,
- Turning the aerodynamic structure component, preferably 180° spanwise,
- Injecting the curable medium in the hollow support structure from a second outer surface, preferably the lower skin section, of the aerodynamic structure component into a second connection area of the aerodynamic structure component and the hollow support structure, wherein the second outer surface is arranged opposite to the first outer surface,
- Curing the curable medium to form a second connection between the aerodynamic structure component and the hollow support structure in the second connection area.

In this embodiment, the method involves a sequence of steps configured to integrate a hollow support structure, such as a honeycomb structure, into the aerodynamic structure component using a curable medium. This process ensures robust connections at multiple points, enhancing the overall strength and stability of the component.

The process begins with injecting the curable medium into the hollow support structure from a first outer surface of the aerodynamic structure component, preferably through the upper skin section. The medium is directed toward a predefined first connection area where the aerodynamic structure component and the hollow support structure interface. Once the medium is in place, it is cured to form a strong and durable bond at this first connection point.

After completing the first connection, the aerodynamic structure component is turned to allow access to its opposite side, exposing the second outer surface, preferably the lower skin section. This step ensures proper positioning and alignment for creating the second connection.

Next, the curable medium is injected into the hollow support structure from the second outer surface. The medium flows into a second connection area, which is situated opposite the first connection area. This ensures that both sides of the hollow support structure are securely bonded to the corresponding sections of the aerodynamic structure component. The injected medium is then cured, forming the second connection.

This dual-injection and curing process provides several advantages. By bonding the hollow support structure at two distinct and opposite connection points, the method ensures even load distribution across the aerodynamic structure component. This enhances structural integrity and reduces the likelihood of localized stress concentrations, which could compromise the component under operational loads.

Additionally, the use of a curable medium allows for precise control over the bonding process, ensuring consistent quality and reliability. The step of turning the component ensures proper alignment and facilitates access to both outer surfaces, enabling the creation of robust and symmetrical connections.

In summary, this method creates a highly integrated and reinforced aerodynamic structure component. The dual bonding of the hollow support structure improves mechanical performance, stability, and durability, making it well-suited for applications requiring high strength-to-weight ratios, such as in aerospace and automotive industries.

According to an embodiment, the hollow support structure comprises at least one of carbon fiber reinforced plastic, glass fiber reinforced plastic, aluminum, paper or other materials.
- Carbon fiber reinforced plastic (CFRP) is known for its excellent strength-to-weight ratio, CFRP is often used in high-performance applications such as aerospace and automotive industries. It offers high stiffness, low density, and resistance to corrosion, making it ideal for lightweight yet strong structural components.
- Glass fiber reinforced plastic (GFRP) provides good mechanical properties, such as strength and durability, but at a lower cost. It is commonly used in applications where moderate strength and impact resistance are needed, such as in the construction of transportation and industrial equipment.
- Aluminum is a lightweight metal with good mechanical properties, corrosion resistance, and ease of fabrication. It is commonly used in both structural and support applications, especially where high strength is required but the weight needs to be kept low.
- In some cases, paper-based materials or paper composites may be used for the hollow support structure, particularly in more environmentally friendly or cost-sensitive applications. These materials may be reinforced with other fibers for improved strength and durability.
- The hollow support structure may also incorporate other materials depending on the specific requirements of the application. This could include materials like composites, polymers, or metals that offer particular benefits such as ease of manufacturing, cost-efficiency, or specialized performance characteristics.

According to an embodiment, the hollow support structure comprises negative tolerances with regard to the aerodynamic structure component. This means that the dimensions of the hollow support structure are slightly smaller than those of the aerodynamic component. The purpose of this design is to ensure a precise and controlled fit when the curable medium is injected and cured.

The use of negative tolerances improves the bonding and stability of the connection between the support structure and the aerodynamic component. The slightly smaller dimensions allow the curable medium to securely fill the space, resulting in a strong and stable bond that enhances the overall integrity of the structure. Additionally, negative tolerances help prevent gaps or voids between the components, ensuring that the curable medium fully penetrates and distributes evenly. This uniform bonding is critical to maintaining the structural integrity of the component. The use of negative tolerances also allows for greater precision in the manufacturing process, ensuring that each component aligns properly during assembly, leading to a higher-quality end product.

According to an embodiment, the curable medium comprises a resin. The use of resin as the curable medium provides several benefits in the manufacturing of aerodynamic structure components. Resins are commonly used in composite materials because they offer excellent bonding properties and can be easily injected into various structures. In this embodiment, the resin is injected into the hollow support structure, where it hardens to form a solid connection between the aerodynamic structure component and the support structure.

The resin, once injected, undergoes a curing process that transforms it from a liquid or semiliquid state into a rigid, durable solid. This curing process can be triggered by heat, light, or chemical reactions, depending on the specific type of resin used. The resulting solid resin creates a strong, stable bond between the different parts of the structure, enhancing its overall strength, rigidity, and resistance to external forces.

In conclusion, the use of resin as the curable medium significantly improves the manufacturing process by providing a strong, reliable bond between the aerodynamic structure component and the hollow support structure, ensuring the structural integrity and performance of the final product.

According to an embodiment, the curable medium comprises a foam. The use of foam as the curable medium in the manufacturing of aerodynamic structure components offers several advantages, particularly in terms of weight reduction, structural strength, and flexibility in the design process.

When injected into the hollow support structure, the foam expands and fills the available space, conforming to the shape of the structure. This expansion helps to reinforce the component, providing both mechanical support and enhanced stability. The foam's lightweight nature is particularly beneficial in aerodynamic applications, as it helps reduce the overall weight of the component, contributing to improved fuel efficiency, speed, and performance in vehicles or aircraft.

Additionally, the foam provides excellent thermal and acoustic insulation properties. This can be crucial in certain applications where temperature regulation or noise reduction is required. The curing process of the foam ensures that it hardens into a stable, resilient material that maintains its shape and properties over time, even under varying environmental conditions.

The foam also offers greater design flexibility. It can be customized to achieve different densities, stiffness levels, or insulating properties, depending on the specific needs of the aerodynamic structure. This versatility makes it an attractive choice for creating components that require both structural integrity and weight-saving characteristics.

In summary, using foam as the curable medium not only enhances the strength and stability of the aerodynamic structure component but also contributes to reducing weight, improving thermal insulation, and offering design flexibility. These advantages make it an ideal choice for applications where performance, efficiency, and cost-effectiveness are key considerations.

According to an embodiment, the method further comprises the step of providing a hypodermic syringe, which is configured to inject the curable medium via the injection hole. The use of a hypodermic syringe in this context offers several advantages in terms of precision, control, and ease of application during the manufacturing process.

The hypodermic syringe, with its fine needle, allows for accurate and controlled injection of the curable medium, ensuring that the material is introduced into the component in a targeted manner. This precision is particularly important when dealing with complex geometries or small injection points, such as the injection holes in the aerodynamic structure component. By using a syringe, the flow rate and volume of the curable medium can be finely adjusted, ensuring that the material is injected exactly where and how much is needed.

Additionally, the syringe may be easily manipulated to inject the curable medium at various locations within the component, including hard-to-reach areas. This flexibility enhances the overall efficiency of the manufacturing process, reducing the need for additional tools or methods.

Furthermore, the syringe enables a high level of repeatability, making the process more reliable and consistent. This is critical in industrial-scale production, where uniformity and precision are key to ensuring the structural integrity and performance of the final product.

In summary, providing a hypodermic syringe for injecting the curable medium ensures precise, controlled, and efficient injection, contributing to the overall quality and reliability of the aerodynamic structure component. The syringe also facilitates the handling of complex geometries and small injection holes, enhancing the flexibility and accuracy of the manufacturing process.

According to an embodiment, the hypodermic syringe comprises a diameter between 4 mm and 8 mm, preferably between 5 mm and 7 mm, most preferably 6 mm.

According to an aspect of the invention, a stiffened aerodynamic structure component, manufactured via an above-mentioned method is provided.

According to an aspect of the invention, an aircraft comprising an above-mentioned stiffened aerodynamic structure component is provided.

According to another aspect a stiffened aerodynamic structure component is provided.

The stiffened aerodynamic structure component comprises
- an aerodynamic structure component including a plurality of spar elements extending spanwise within the aerodynamic structure component, wherein the plurality of spar elements are integrally formed with an upper skin section and a lower skin section, thereby forming an integrally formed aerodynamic structure component;
- at least one chordwise reinforcement element generated by the introduction of a curable medium injected via at least one injection hole located in the upper skin section and/or the lower skin section.

According to an embodiment the stiffened aerodynamic structure component comprises at least one bay for receiving the curable medium, the bay being provided by at least one dam arranged in a chordwise direction of the aerodynamic structure component.

According to an embodiment of the stiffened aerodynamic structure component, the at least one dam comprises an inflatable element.

According to an embodiment of the stiffened aerodynamic structure component, the inflatable element is adapted to remain within the aerodynamic structure component.

According to an embodiment of the stiffened aerodynamic structure component, the inflatable element is adapted to be removable from the aerodynamic structure component via a hole.

### Brief description of the figures

Fig. 1 shows a flowchart of the method for manufacturing a stiffened aerodynamic structure component;
Fig. 2 shows a detailed view of a chordwise cut through the aerodynamic structure component;
Fig. 3 shows a detailed view of another embodiment with a dam;
Fig. 4 shows a detailed view of the method including the step of turning the component; and
Fig. 5 shows an aircraft comprising a stiffened component.

### Detailed description

The illustrations in the figures are schematic and not to scale. If the same reference signs are used in different figures in the following description of the figures, they designate identical or similar elements. However, identical or similar elements can also be designated by different reference symbols.

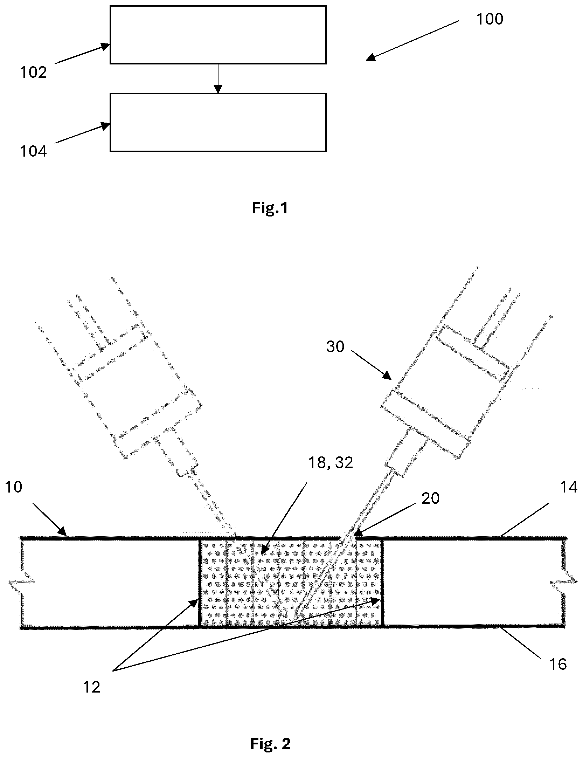

Fig. 1 shows a flowchart of the method 100 for manufacturing a stiffened aerodynamic structure component 10. For a better understanding it is also referred to Fig. 2.

The process begins with providing 102 an aerodynamic structure component 10, which includes a plurality of spar elements 12 extending spanwise within the structure. These spar elements 12 are integrally formed with an upper skin section 14 and a lower skin section 16, resulting in an integrally formed aerodynamic structure component 10. The spanwise arrangement of the spar elements 12 helps distribute loads along the structure, providing it with the necessary stability and strength.

Next, at least one chordwise reinforcement element 18 is generated 104. This is accomplished by injecting a curable medium 32 through at least one injection hole 20 in the upper skin section 14 and/or the lower skin section 16. The curable medium 32 flows into the internal cavities between the spar elements 12 of the aerodynamic structure and solidifies, forming the chordwise reinforcement element 18. This step enhances the rigidity of the component 10, enabling it to efficiently transfer mechanical loads and resist deformations.

By following these steps, the method 100 results in a highly durable and lightweight aerodynamic structure. The integration of spar elements 12 and chordwise reinforcement elements 18 creates a balanced configuration that optimizes both strength and weight, offering a robust solution for applications in fields such as aviation.

Fig. 2 shows a detailed view of a chordwise cut through the aerodynamic structure component 10 manufactured in accordance with the method 100 as described in Fig.1. The aerodynamic structure component 10 is configured to provide structural integrity while being lightweight. It consists of a plurality of spar elements 12 that extend spanwise within the component.

The aerodynamic structure component 10 includes at least one chordwise reinforcement element 18. This reinforcement element 18 is generated by injecting a curable medium 32, which solidifies to form the reinforcement. The curable medium 32 is injected via an injection hole 20, positioned in the upper skin section 14, ensuring that the medium 32 fills the internal cavities of the structure and enhances its rigidity.

As can be seen in Fig. 2 a hypodermic syringe 30 is provided, which is configured to inject the curable medium 32 through the injection hole 20. The syringe 30 ensures precise control over the injection process, facilitating accurate placement of the curable medium 32 to form the chordwise reinforcement element 18 effectively. This ensures that the aerodynamic structure component 10 is both strong and stable, meeting the necessary performance standards while also being lightweight and durable.

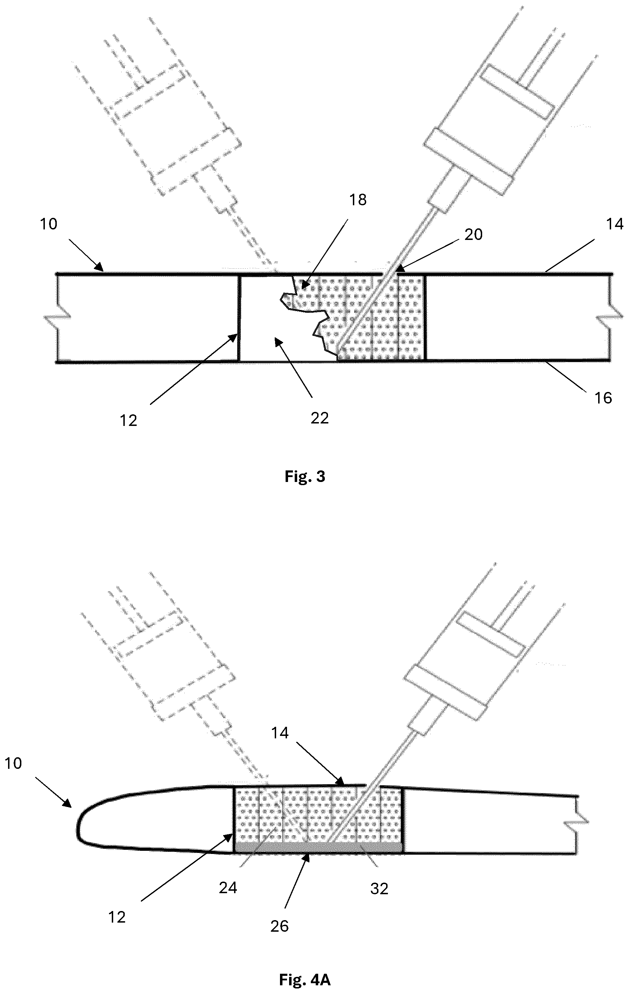

Fig. 3 shows a detailed view of another embodiment of the stiffened aerodynamic structure component 10, with a dam 22. To facilitate the method 100, a bay is created for the curable medium 32 by providing the dam 22 in the chordwise direction. The dam 22 helps to control the flow of the curable medium 32 by preventing its spread beyond the intended area. This ensures that the medium 32 is injected precisely into the desired region, where it solidifies and forms the chordwise reinforcement element 18. In Fig. 3, the dam 22 is shown partially to illustrate its position within the aerodynamic structure component 10, highlighting its role in confining and guiding the curable medium 32.

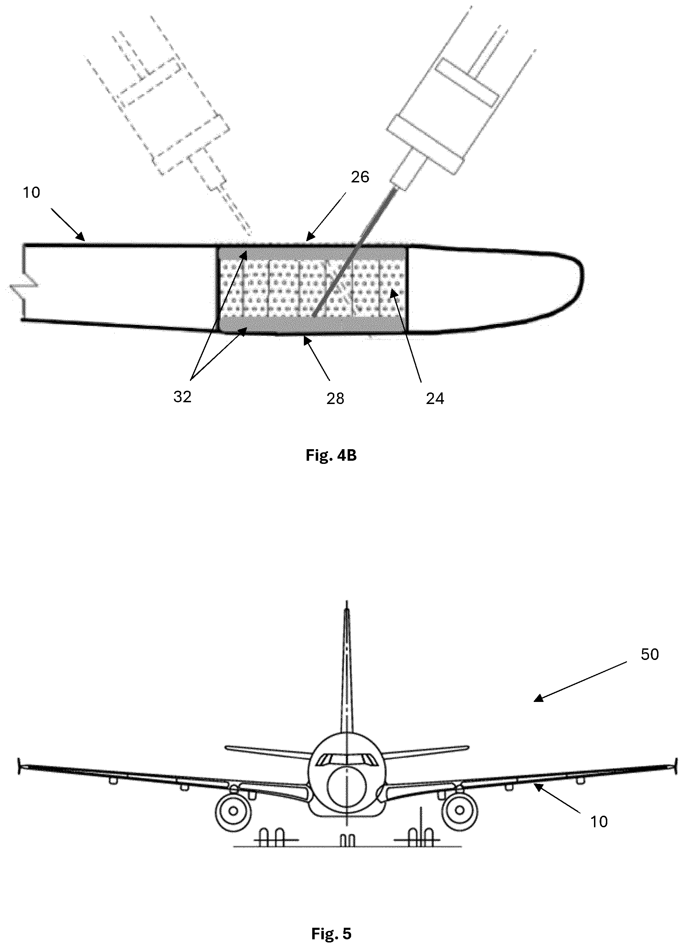

Fig. 4A and 4B show detailed views of the method including the step of turning the component 10.

First, as shown in Fig. 4A, the curable medium 32 is injected into a hollow support structure 24 from a first outer surface, preferably the upper skin section 14, of the aerodynamic structure component 10. This injection occurs into a first connection area 26, where the aerodynamic structure component 10 and the hollow support structure 24 are connected. After injection, the curable medium 32 is cured to form a strong bond between the two structures in the first connection area 26.

Next, as shown in Fig. 4B, the aerodynamic structure component 10 is turned 180° spanwise. This rotation allows for the next phase of reinforcement. The curable medium 32 is then injected from the opposite side, the lower skin section 16, into a second connection area 28 where the aerodynamic structure component 10 and the hollow support structure 24 meet. After injection, the curable medium 32 is again cured to establish a second connection between the components in the second connection area 28. These steps ensure a stable and durable connection between the aerodynamic structure component 10 and the hollow support structure 24, reinforcing the overall structural integrity.

The method 100 shown in Fig 4A and 4B further involve the use of a hollow support structure 24 that is configured with negative tolerances in relation to the aerodynamic structure component 10. This means that the dimensions of the hollow support structure 24 are intentionally made smaller than the corresponding dimensions of the aerodynamic structure component 10. This configuration ensures that, during the assembly process, the hollow support structure 24 fits within the aerodynamic structure component 10, creating a tight and secure connection.

The negative tolerances allow for better alignment and improve the bonding process when the curable medium 32 is injected. As the curable medium 32 fills the gap between the components, it ensures that the two structures are bonded tightly, enhancing the overall strength and stability of the final product. The use of negative tolerances is advantageous for achieving a precise and reliable connection between the aerodynamic structure component 10 and the hollow support structure 24, which is essential for maintaining the structural integrity of the component.

Fig. 5 shows an aircraft 50 including a stiffened aerodynamic structure component 10. The aerodynamic structure component 10 offers a compromise between a composite optimized load introduction combined with an easy to manufacturing solution.

### Reference Signs

- 10: Aerodynamic structure component
- 12: Spar elements
- 14: Upper skin section
- 16: Lower skin section
- 18: Chordwise reinforcement element
- 20: Injection hole
- 22: Dam
- 24: Hollow support structure
- 26: First connection area
- 28: Second connection area
- 30: Hypodermic syringe
- 32: Curable medium
- 50: Aircraft
- 100: Method for manufacturing a stiffened aerodynamic structure component
- 102: Providing an aerodynamic structure component
- 104: Generating at least one chordwise reinforcement element

## Claims

1. Method (100) for manufacturing a stiffened aerodynamic structure component (10), comprising the following steps:
- Providing (102) an aerodynamic structure component (10), wherein the aerodynamic structure component (10) includes a plurality of spar elements (12) extending spanwise within the aerodynamic structure component (10);
wherein the plurality of spar elements (12) is integrally formed with an upper skin section (14) and a lower skin section (16), thereby providing an integrally formed aerodynamic structure component (10),
- Generating (104) at least one chordwise reinforcement element (18) by injecting a curable medium (32), preferably via at least one injection hole (20), in the upper skin section (14) and/or the lower skin section (16).

2. Method (100) according to claim 1, wherein the method further comprises the step of:
- Providing (104) at least one bay for the curable medium (32) to be injected by providing at least one dam (22) in a chordwise direction of the aerodynamic structure component (10).

3. Method (100) according to claim 2, wherein the dam (22) comprises an inflatable element.

4. Method (100) according to claim 3, wherein the inflatable element is adapted to remain in the aerodynamic structure component (10).

5. Method (100) according to claim 3, wherein the inflatable element is adapted to be removable from the aerodynamic structure component (10) via a hole.

6. Method (100) according to any one of the preceding claims, wherein the method (100) further comprises the step of
- Providing a hollow support structure (24), preferably a honeycomb structure, to generate the chordwise reinforcement element (18).

7. Method (100) according to claim 6, wherein the method (100) further comprises the steps of:
- Injecting the curable medium (32) in the hollow support structure (24) from a first outer surface, preferably from the upper skin section (14), of the aerodynamic structure component (10) into a first connection area (26) of the aerodynamic structure component (10) and the hollow support structure (24),
- Curing the curable medium to form a first connection between the aerodynamic structure component (10) and the hollow support structure (24) in the first connection area (26),
- Turning the aerodynamic structure component (112), preferably 180° spanwise,
- Injecting the curable medium (32) in the hollow support structure (24) from a second outer surface, preferably the lower skin section (16), of the aerodynamic structure component (10) into a second connection area (28) of the aerodynamic structure component and the hollow support structure (24), wherein the second outer surface is arranged opposite to the first outer surface,
- Curing the curable medium (32) to form a second connection between the aerodynamic structure component (10) and the hollow support structure (24) in the second connection area (28).

8. Method (100) according to claim 6 or 7, wherein the hollow support structure (24) comprises at least one of: carbon fiber reinforced plastic, glass fiber reinforced plastic, aluminum, paper or other materials.

9. Method (100) according to claim 6 to 8, wherein the hollow support structure (24) comprises negative tolerances with regard to the aerodynamic structure component (10).

10. Method (100) according to any one of the preceding claims, wherein the curable medium comprises a resin.

11. Method (100) according to any one of the preceding claims, wherein the curable medium comprises a foam.

12. Method (100) according to any one of the preceding claims, further comprising the step of providing a hypodermic syringe (30), which is configured to inject the curable medium via the at least one injection hole (20).

13. Method (100) according to any one of the preceding claims, wherein the hypodermic syringe (30) comprises a diameter between 4 mm and 8 mm, preferably between 5 mm and 7 mm, most preferably 6 mm.

14. Stiffened aerodynamic structure component (10), manufactured via a method (100) according to one of the preceding claims.

15. Aircraft (50) comprising a stiffened aerodynamic structure component (10) according to claim 14.

## Amended claims

### Amended claims in accordance with Rule 137(2) EPC.

1. Method (100) for manufacturing a stiffened aerodynamic structure component (10), comprising the following steps:
- Providing (102) an aerodynamic structure component (10), wherein the aerodynamic structure component (10) includes a plurality of spar elements (12) extending spanwise within the aerodynamic structure component (10);
wherein the plurality of spar elements (12) is integrally formed with an upper skin section (14) and a lower skin section (16), thereby providing an integrally formed aerodynamic structure component (10),
- Generating (104) at least one chordwise reinforcement element (18) by injecting a curable medium (32) in the upper skin section (14) and/or the lower skin section (16).

2. Method (100) according to claim 1, wherein the method further comprises the step of:
- Providing (104) at least one bay for the curable medium (32) to be injected by providing at least one dam (22) in a chordwise direction of the aerodynamic structure component (10).

3. Method (100) according to claim 2, wherein the dam (22) comprises an inflatable element.

4. Method (100) according to claim 3, wherein the inflatable element is adapted to remain in the aerodynamic structure component (10).

5. Method (100) according to claim 3, wherein the inflatable element is adapted to be removable from the aerodynamic structure component (10) via a hole.

6. Method (100) according to any one of the preceding claims, wherein the method (100) further comprises the step of
- Providing a hollow support structure (24), preferably a honeycomb structure, to generate the chordwise reinforcement element (18).

7. Method (100) according to claim 6, wherein the method (100) further comprises the steps of:
- Injecting the curable medium (32) in the hollow support structure (24) from a first outer surface, preferably from the upper skin section (14), of the aerodynamic structure component (10) into a first connection area (26) of the aerodynamic structure component (10) and the hollow support structure (24),
- Curing the curable medium to form a first connection between the aerodynamic structure component (10) and the hollow support structure (24) in the first connection area (26),
- Turning the aerodynamic structure component (112), preferably 180° spanwise,
- Injecting the curable medium (32) in the hollow support structure (24) from a second outer surface, preferably the lower skin section (16), of the aerodynamic structure component (10) into a second connection area (28) of the aerodynamic structure component and the hollow support structure (24), wherein the second outer surface is arranged opposite to the first outer surface,
- Curing the curable medium (32) to form a second connection between the aerodynamic structure component (10) and the hollow support structure (24) in the second connection area (28).

8. Method (100) according to claim 6 or 7, wherein the hollow support structure (24) comprises at least one of: carbon fiber reinforced plastic, glass fiber reinforced plastic, aluminum, paper or other materials.

9. Method (100) according to any one of the preceding claims, wherein the curable medium comprises a resin.

10. Method (100) according to any one of the preceding claims, wherein the curable medium comprises a foam.

11. Method (100) according to any one of the preceding claims, further comprising the step of providing a hypodermic syringe (30), which is configured to inject the curable medium via at least one injection hole (20).

12. Method (100) according to claim 11, wherein the hypodermic syringe (30) comprises a diameter between 4 mm and 8 mm, preferably between 5 mm and 7 mm, most preferably 6 mm.

13. Stiffened aerodynamic structure component (10), manufactured via a method (100) according to one of the preceding claims.

14. Aircraft (50) comprising a stiffened aerodynamic structure component (10) according to claim 13.
